# EUROPEAN PATENT APPLICATION

(11) **EP 4 730 491 A1**
(43) Date of publication of application: **22.04.2026**
(21) Application number: 25187945.8
(22) Date of filing: 07.07.2025
(51) Int. Cl.: H01M 10/658, H01M 50/211, H01M 50/289, H01M 50/30

(54) **BATTERY MODULE AND BATTERY PACK INCLUDING THE SAME**

(30) Priority: 18.10.2024 KR 20240143173
(71) Applicant: SK On Co., Ltd., Seoul 03161 (KR)
(72) Inventor: KANG, In Seob, 34124 Daejeon (KR); YOON, Ji Sang, 34124 Daejeon (KR)
(74) Representative: Prüfer & Partner mbB Patentanwälte · Rechtsanwälte

(57) **Abstract**

A battery module includes a cell assembly including a plurality of battery cells and a thermal barrier disposed between at least some of the plurality of battery cells, a module case including a module cover covering the cell assembly, and a heat transfer blocking member disposed between the thermal barrier and the module cover. The thermal barrier includes a first surface and a second surface facing in opposite directions and restricts heat transfer between a first battery cell facing the first surface and a second battery cell facing the second surface, and the heat transfer blocking member includes a receiving groove into which an end of the thermal barrier is inserted.

## Description

### TECHNICAL FIELD

The disclosure and implementations disclosed in this patent document generally relate to a battery module including a plurality of battery cells (secondary batteries) capable of being charged and discharged, and a battery pack including the same.

### BACKGROUND

Secondary batteries, unlike primary batteries, may be charged and discharged, and may be applied to devices within various fields such as digital cameras, mobile phones, laptops, hybrid cars, and electric cars. For example, secondary batteries may include lithium secondary batteries, nickel-cadmium batteries, nickel-metal hydride batteries, nickel-hydrogen batteries, and the like.

These secondary batteries may be manufactured as flexible pouch-type battery cells or rigid can-type battery cells. Can-type battery cells may be classified as prismatic battery cells, cylindrical battery cells, coin-type battery cells, and the like, depending on their external shape.

### SUMMARY

The present disclosure can be implemented in some embodiments to provide a battery module including a cell assembly and a module case accommodating the cell assembly.

When various events occur, such as when the battery cell reaches the end of its life, when swelling occurs in the battery cell, when overcharging occurs in the battery cell, when the battery cell is exposed to heat, when a sharp object such as a nail penetrates the casing (outer material) of the battery cell, or when an external impact is applied to the battery cell, the battery cell may ignite and cause a thermal runaway phenomenon.

As the thermal runaway phenomenon occurs, by-products (for example, gas, flame, and conductive particles) generated by the battery cell may move to an adjacent battery cell or battery module.

The module case may include a venting hole to discharge by-products generated by the battery cell to a designated location. However, if gas, flame, or the like generated by the battery cell are not smoothly discharged through the venting hole, they may affect an adjacent battery cell, causing a thermal runaway phenomenon.

According to an aspect of the present disclosure, a battery module capable of delaying heat propagation and thermal runaway between battery cells and a battery pack including the same may be provided.

According to an aspect of the present disclosure, a battery module capable of blocking or preventing high-temperature gas, flame, or the like generated by a battery cell from flowing into an adjacent battery cell, and a battery pack including the same, may be provided.

According to an aspect of the present disclosure, a battery module in which a configuration for delaying or blocking thermal runaway may be easily installed, and a battery pack including the same, may be provided.

A battery module according to an aspect of the present disclosure and a battery pack including the same may be widely applied to devices within green technology fields such as electric vehicles, battery charging stations, and other solar power generation and wind power generation using batteries. In addition, the battery module according to an aspect of the present disclosure and the battery pack including the same may be used in eco-friendly electric vehicles, hybrid vehicles, and the like to prevent climate change by suppressing air pollution and greenhouse gas emissions.

In some embodiments of the present disclosure, a battery module includes a cell assembly including a plurality of battery cells and a thermal barrier disposed between at least some of the plurality of battery cells; a module case including a module cover covering the cell assembly; and a heat transfer blocking member disposed between the thermal barrier and the module cover. The thermal barrier includes a first surface and a second surface facing in opposite directions and restricts heat transfer between a first battery cell facing the first surface and a second battery cell facing the second surface, and the heat transfer blocking member includes a receiving groove into which an end of the thermal barrier is inserted.

In one embodiment, in the cell assembly, the plurality of battery cells and the thermal barrier may be disposed in a first direction, and the heat transfer blocking member may contact the thermal barrier and the module cover in a second direction, perpendicular to the first direction, respectively, and may block a gap between the thermal barrier and the module cover.

In one embodiment, the module cover may include a cover body of a plate shape, and a plurality of venting holes formed in the cover body and configured to discharge at least one of flam or gas generated from the plurality of battery cells to the outside of the module case, and the heat transfer blocking member may be disposed between the thermal barrier and the cover body.

In one embodiment, the plurality of venting holes may be disposed so as not to overlap the thermal barrier and the heat transfer blocking member, respectively, in the second direction.

In one embodiment, the heat transfer blocking member may include an elastic material.

In one embodiment, the heat transfer blocking member may include at least one of Ethylene Propylene Diene Monomer (EPDM), nitrile butadiene rubber (NBR), fluoroelastomer (FKM), thermoplastic elastomer (TPE), and silicone rubber.

In one embodiment, the heat transfer blocking member may further include a top part covering the thermal barrier and an extension portion extending from the top part to form the receiving groove.

In one embodiment, the extension portion may include a plurality of protrusions spaced apart from each other in a longitudinal direction of the heat transfer blocking member.

In one embodiment, the protrusions may include a first protrusion and a second protrusion formed on both ends of the heat transfer blocking member, respectively, and at least one third protrusion disposed between the first protrusion and the second protrusion.

In one embodiment, the extension portion may include a guide portion formed at an entrance of the receiving groove and widening in a direction toward the thermal barrier.

In one embodiment, the guide portion may include at least one of a chamfer shape or a round shape.

In one embodiment, the heat transfer blocking member may include an inner portion contacting the thermal barrier and an outer portion located outside of the inner portion. The inner portion may include a material having a higher degree of hardness than a hardness of the outer portion.

In one embodiment, the inner portion may include a plastic material, and the outer portion may include an elastic material.

In one embodiment, the outer portion may include at least a portion of Ethylene Propylene Diene Monomer (EPDM), Nitrile Butadiene Rubber (NBR), fluoroelastomer (FKM), thermoplastic elastomer (TPE), and silicone rubber.

In one embodiment, the heat transfer blocking member may include a top part covering the thermal barrier and an extension portion extending from the top part to form the receiving groove. The extension portion may include a plurality of protrusions spaced apart from each other in a longitudinal direction of the heat transfer blocking member, and the inner portion may be disposed on each of the plurality of protrusions.

In one embodiment, the inner portion may have a continuous shape in a longitudinal direction of the heat transfer blocking member.

In one embodiment, the heat transfer blocking member may include a top part covering the thermal barrier and an extension portion extending from the top part to form the receiving groove. The outer portion may include a plurality of protrusions spaced apart from each other in the longitudinal direction of the heat transfer blocking member, and the inner portion may have a shape exposed externally between the protrusions.

In one embodiment, the inner portion and the outer portion may be integrally formed through double injection.

In one embodiment, the module cover may include a plurality of venting holes configured to discharge at least one of flam or gas generated from the plurality of battery cells to the outside of the module case. The battery module may further include a sheet member disposed on the module cover to close the plurality of venting holes.

In some embodiments of the present disclosure, a battery pack includes a pack housing; and a plurality of battery modules accommodated in the pack housing. The battery modules include a cell assembly including a plurality of battery cells and a thermal barrier disposed between at least some of the plurality of battery cells; a module case including a module cover covering the cell assembly; and a heat transfer blocking member disposed between the thermal barrier and the module cover. The thermal barrier includes a first surface and a second surface facing in opposite directions, and restricts heat transfer between a first battery cell facing the first surface and a second battery cell facing the second surface, and the heat transfer blocking member includes a receiving groove into which an end of the thermal barrier is inserted.

### BRIEF DESCRIPTION OF DRAWINGS

Certain aspects, features, and advantages of the present disclosure are illustrated by the following detailed description with reference to the accompanying drawings.
FIG. 1 is a partially exploded perspective view of a battery module according to one embodiment.
FIG. 2 is a cross-sectional view taken along line I-I' of FIG. 1.
FIG. 3 is a perspective view of a battery cell according to one embodiment.
FIG. 4 is an enlarged cross-sectional view of part "A" of FIG. 2.
FIG. 5 is a schematic diagram illustrating the state before and after coupling a heat transfer blocking member and a thermal barrier according to one embodiment.
FIG. 6 is a perspective view illustrating a heat transfer blocking member according to another embodiment.
The (a) to (d) portions of FIG. 7 are side views illustrating various forms of protrusions in heat transfer blocking members.
FIG. 8 and FIG. 9 are front views illustrating a heat transfer blocking member according to a modified embodiment.
FIG. 10 is a schematic diagram illustrating the state before and after coupling a heat transfer blocking member and a thermal barrier according to the other embodiment.
FIG. 11 is a perspective view illustrating a heat transfer blocking member according to the other embodiment.
FIG. 12 is a perspective view illustrating a heat transfer blocking member according to the other embodiment.
FIG. 13 is a partially exploded perspective view of a battery pack according to one embodiment.

### DETAILED DESCRIPTION

Features of the present disclosure disclosed in this patent document are described by example embodiments with reference to the accompanying drawings.

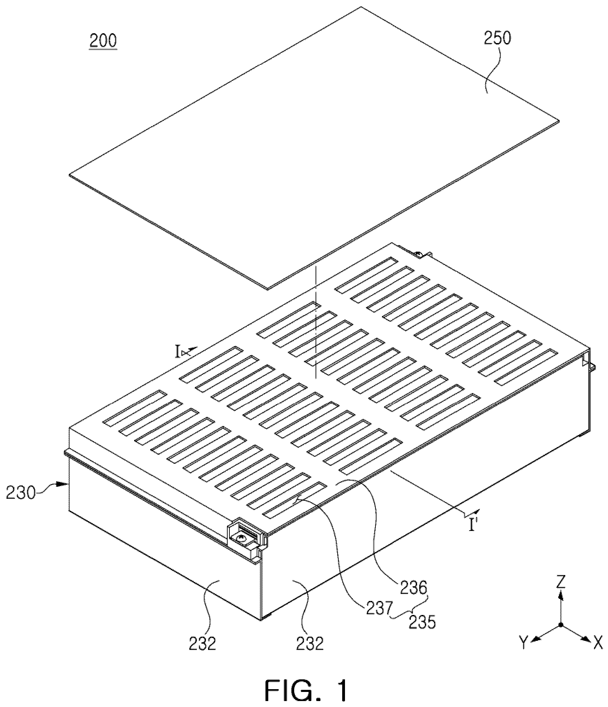

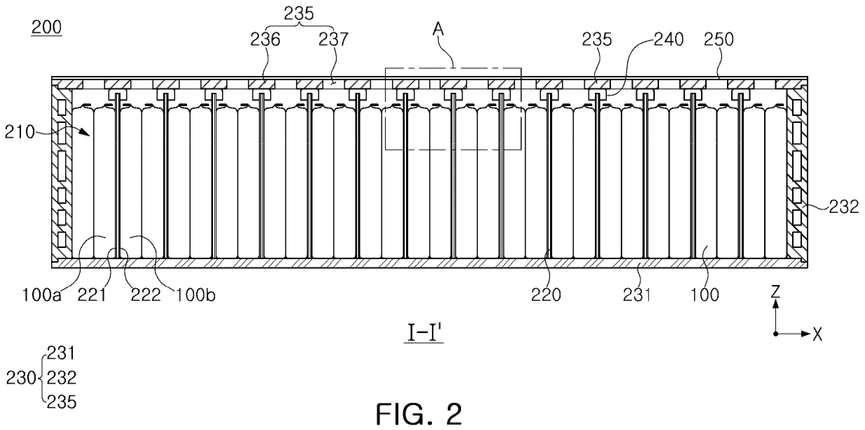

FIG. 1 is a partially exploded perspective view of a battery module 200 according to one embodiment. FIG. 2 is a cross-sectional view taken along line I-I' of FIG. 1.

Referring to FIGS. 1 and 2, the battery module 200 according to one embodiment may include a cell assembly 210, a module case 230, and a heat transfer blocking member 240.

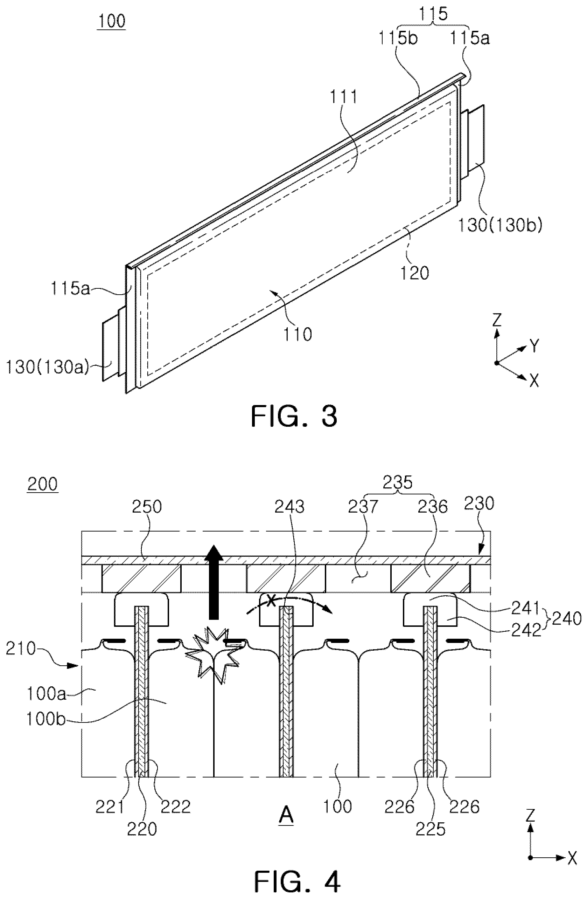

The cell assembly 210 may include a plurality of battery cells 100 and a thermal barrier 220 disposed between at least some of the plurality of battery cells 100. The module case 230 may include a module cover 235 covering the cell assembly 210. The heat transfer blocking member 240 may be disposed between the thermal barrier 220 and the module cover 235. The thermal barrier 220 includes a first surface 221 and a second surface 222 facing in opposite directions, and may limit heat transfer between a first battery cell 100a facing the first surface 221 and a second battery cell 100b facing the second surface 222. The heat transfer blocking member 240 may include a receiving groove 243 (see FIG. 4) into which an end of the thermal barrier 220 is inserted.

The cell assembly 210 may include a plurality of battery cells 100. As an example, the battery cell 100 may include a pouch-type cell. However, the type of the battery cell 100 is not limited thereto, and may also include a prismatic cell or a cylindrical cell. The plurality of battery cells 100 may be arranged in the first direction (X), but the arrangement direction or arrangement structure may be changed in various ways.

The thermal barrier 220 may be disposed between at least some of the plurality of battery cells 100. For example, two battery cells 100 may be disposed between adjacent thermal barriers 220, but the number of battery cells 100 disposed between the thermal barriers 220 may be varied.

The thermal barrier 220 may include a first surface 221 and a second surface 222 facing in opposite directions. The thermal barrier 220 may limit heat transfer between a first battery cell 100a facing the first surface 221 and a second battery cell 100b facing the second surface 222. The thermal barrier 220 may prevent or limit heat or flames from being transferred between adjacent battery cells 100 in the first direction (X).

To this end, the thermal barrier 220 may include a material having at least one property among flame retardancy, heat resistance, and insulation. In this case, heat resistance may refer to a property of not melting and not changing shape even at a temperature of 300 degrees Celsius or higher, and insulation may refer to a property of having a thermal conductivity of 1.0 W/mK or lower. To secure higher insulation, the thermal conductivity may also have a value of 0.5 W/mK or lower, or 0.3 W/mK or lower. Flame retardancy is a property of preventing or suppressing self-combustion when a fire source is removed, and may mean, for example, a grade of V-0 or higher in the UL94 V Test.

The cell assembly 210 may be formed by disposing a plurality of battery cells 100 and a thermal barrier 220 in the first direction (X). The cell assembly 210 may include a plurality of battery cells 100 and a plurality of thermal barriers 220. At least one battery cell may be disposed between adjacent thermal barriers 220.

The module case 230 may have a shape that covers at least a portion of the outer surface of the cell assembly 210. For example, the module case 230 may include a module cover 235 that covers the upper surface of the cell assembly 210.

The module cover 235 may include a cover body 236 of a plate shape and a plurality of venting holes 237 formed in the cover body 236 to discharge at least one of flames or gases generated by a plurality of battery cells 100 externally. The cover body 236 may have a size and shape that covers the upper surface of the cell assembly 210. The module cover 235 according to one embodiment may also have a shape that covers not only the upper surface of the cell assembly 210 but also a portion of the side surface. The venting hole 237 may be formed in a location not overlapping with the heat transfer blocking member 240 and the thermal barrier 220 in the cover body 236.

The module case 230 may additionally include a bottom plate 231 supporting the lower surface of the cell assembly 210, and a plurality of side plates 232 facing the side surfaces of the cell assembly 210. As an example, FIG. 1 illustrates that the module case 230 has a shape that covers all six sides of the cell assembly 210, but the shape of the module case 230, the divided shape, and the coupling structure thereof are not limited thereto. In one embodiment, at least some of the bottom plate 231 and the plurality of side plates 232 may be omitted, and thus at least one external surface of the cell assembly 210 may have a shape that is exposed externally.

The heat transfer blocking member 240 may be disposed between the thermal barrier 220 and the module cover 235. The heat transfer blocking member 240 may block the gap between the thermal barrier 220 and the module cover 235 by contacting the thermal barrier 220 and the module cover 235 in the second direction (Z) perpendicular to the first direction (X). Accordingly, the heat transfer blocking member 240 may block or limit the gas or flames generated in the first battery cell 100a disposed facing the first surface 221 of the thermal barrier 220 from being transmitted or moved to the second battery cell 100b disposed facing the second surface 222 of the thermal barrier 220. The heat transfer blocking member 240 may be disposed between the thermal barrier 220 and the cover body 236 of the module cover 235.

The heat transfer blocking member 240 may include an elastic material. Since the heat transfer blocking member 240 has elasticity, it may effectively block the gap between the thermal barrier 220 and the module cover 235.

The heat transfer blocking member 240 may include at least some of Ethylene Propylene Diene Monomer (EPDM), nitrile butadiene rubber (NBR), fluoroelastomer (FKM), thermoplastic elastomer (TPE), and silicone rubber. The heat transfer blocking member 240 may include a heat-resistant and/or flame-retardant material.

The battery module 200 according to one embodiment may additionally include a sheet member 250 disposed on the module cover 235 to close the venting holes 237. As an example, the sheet member 250 may cover the venting holes 237, on the module cover 235. The sheet member 250 may block the venting holes 237 to prevent moisture from flowing into the module case 230 through the venting holes 237.

The sheet member 250 may open the venting holes 237 by melting or burning due to high-temperature gas or flames when an event such as thermal runaway occurs. Accordingly, high-temperature gas or flames generated in the battery cell 100 when an event occurs may be easily discharged externally of the module cover 235 through the venting holes 237.

FIG. 3 is a perspective view of a battery cell 100 according to one embodiment.

The battery cell 100 of the present disclosure will be described using a pouch-type cell as an example. Referring to FIG. 3, in one embodiment, the battery cell 100 may include a pouch 110, an electrode assembly 120, and an electrode tab 130. The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery that may be charged and discharged.

The pouch 110 may form at least a portion of the exterior of the battery cell 100. The pouch 110 may include an electrode receiving portion 111 that receives the electrode assembly 120 and a sealing portion 115 for sealing at least a portion of the periphery of the electrode receiving portion 111. The electrode receiving portion 111 may provide a space in which the electrode assembly 120 and an electrolyte are received.

The sealing portion 115 may be formed by joining at least portions of the periphery of the pouch 110. The sealing portion 115 is formed in a flange shape that extends outward from an electrode receiving portion 111 formed in a container shape, and may be disposed along at least a portion of the outer periphery of the electrode receiving portion 111. In one embodiment, the sealing portion 115 may include a first sealing portion 115a formed on a flange where the electrode tab 130 is positioned, and a second sealing portion 115b formed on a flange where the electrode tab 130 is not positioned. A portion of the electrode tab 130 may be withdrawn or exposed externally of the pouch 110.

In one embodiment, the electrode tab 130 may be disposed to face opposite directions on both sides of the battery cell 100 in the longitudinal direction (Y) thereof. For example, the electrode tab 130 may include a cathode lead 130a of a first polarity (for example, cathode) facing one side of the longitudinal direction of the battery cell 100, and an anode lead 130b of a second polarity (for example, anode) facing the other side thereof in the longitudinal direction of the battery cell 100. The electrode tab 130 may be referred to as an electrode lead. The direction in which the electrode tab 130 is positioned may vary depending on the specifications of the battery cell 100.

In one embodiment, at least a portion of the sealing portion 115 may be formed in a form that is folded at least once. By folding at least a portion of the sealing portion 115, the bonding reliability of the sealing portion 115 may be improved, and the area of the sealing portion 115 may be significantly reduced.

The electrode assembly 120 may include a cathode plate, an anode plate, and a separator. The separator may prevent contact between the cathode plate and the anode plate. The electrode assembly may have various forms, such as a winding type, a stacking type, a zigzag-folding type, and a stack-folding type.

Meanwhile, in one embodiment, the type of the battery cell is not limited to a pouch-type cell, and may also include a prismatic cell or a cylindrical cell.

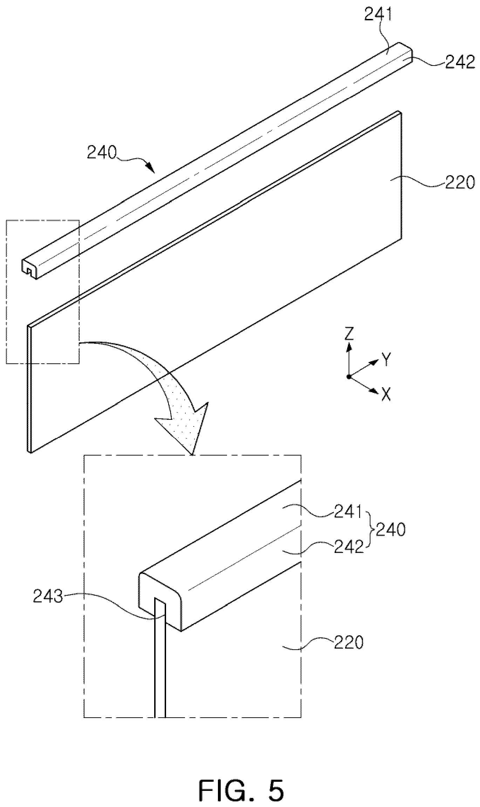

FIG. 4 is an enlarged cross-sectional view of the "A" portion of FIG. 2. FIG. 5 is a schematic diagram illustrating a state before and after coupling of a heat transfer blocking member 240 and a thermal barrier 220 according to one embodiment.

Referring to FIGS. 4 and 5, a plurality of battery cells 100 and a thermal barrier 220 may be disposed in a first direction (X). The heat transfer blocking member 240 may include a receiving groove 243 into which an end of the thermal barrier 220 is inserted. For example, the upper end of the thermal barrier 220 may be inserted into the receiving groove 243 of the heat transfer blocking member 240.

The heat transfer blocking member 240 may include a top part 241 covering the thermal barrier 220, and an extension portion 242 extending from the top part 241 to form the receiving groove 243. The top part 241 of the heat transfer blocking member 240 may cover the end of the thermal barrier 220 from the upper side. The extension portion 242 may extend downward from both ends of the top part 241 respectively to form a receiving groove 243 into which the end of the thermal barrier 220 is inserted. The heat transfer blocking member 240 may include a U-shaped cross-sectional shape overall.

The thermal barrier 220 may include a first surface 221 and a second surface 222 facing in opposite directions in the first direction (X). The battery cell 100 may include a first battery cell 100a facing the first surface 221 and a second battery cell 100b facing the second surface 222. The thermal barrier 220 may prevent or limit heat or flames from being transferred between the first battery cell 100a and the second battery cell 100b in the first direction (X).

The heat transfer blocking member 240 may close the gap between the thermal barrier 220 and the module cover 235 by contacting the thermal barrier 220 and the module cover 235 in the second direction (Z) perpendicular to the first direction (X).

The module cover 235 may include a cover body 236 of a plate shape and a plurality of venting holes 237 formed in the cover body 236 to discharge at least one of flames or gases generated by a plurality of battery cells 100 externally. The heat transfer blocking member 240 may be disposed between the thermal barrier 220 and the cover body 236.

The heat transfer blocking member 240 may block the gap between the thermal barrier 220 and the cover body 236. Accordingly, the gas or flames generated by the battery cell 100 disposed on one side of the thermal barrier 220 may be blocked or limited from moving or propagating through the gap between the thermal barrier 220 and the cover body 236 to the battery cell 100 disposed on the other side of the thermal barrier 220. Therefore, according to one embodiment, thermal runaway may be delayed or limited.

The plurality of venting holes 237 may be disposed so as not to overlap the thermal barrier 220 and the heat transfer blocking member 240 in the second direction (Z).

In the case of a comparative example in which the heat transfer blocking member 240 has a structure in which the venting hole 237 is blocked, flames or gases generated in the battery cell 100 are blocked by the heat transfer blocking member 240 and cannot be easily discharged through the venting hole 237. When the heat transfer blocking member 240 blocks the venting hole 237, the heat transfer blocking member 240 may act as resistance to the discharge of gas. In this case, gas or flames that are not discharged through the venting hole 237 not only increase the pressure inside the module case 230, but also flow inside the module case 230 due to the convection phenomenon. Therefore, gas or flames generated in some of the battery cells 100 may be transferred to adjacent battery cells 100, which may have a negative effect on thermal runaway.

However, according to one embodiment, since the venting hole 237 does not overlap the thermal barrier 220 and the heat transfer blocking member 240 in the second direction (Z), flames or gases generated by the battery cells 100 may be easily discharged through the venting hole 237. Accordingly, gases or flames generated by some of the battery cells 100 may be limited or prevented from being transferred to adjacent battery cells 100 and causing thermal runaway.

The thermal barrier 220 may include an insulating member 225. The insulating member 225 may include a material having at least one property among flame retardancy, heat resistance, and insulation. In this case, heat resistance may refer to a property of not melting and not changing shape even at a temperature of 300 degrees Celsius or higher, and insulation may refer to a property of having a thermal conductivity of 1.0 W/mK or less. To secure higher insulation, the thermal conductivity may also have a value of 0.5 W/mK or less, or 0.3 W/mK or less. Flame retardancy is a property that prevents or suppresses self-combustion when a fire source is removed, and may refer to a grade of V-0 or higher in the UL94 V Test, for example.

The insulating member 225 may include at least some materials among mica, silica, silicate, graphite, alumina, ceramic wool, and aerogel that may perform heat and/or flame propagation prevention functions. However, the material of the insulating member 225 is not limited thereto. For example, the insulating member 225 may be various known materials as long as it may maintain its shape in a thermal runaway situation of the battery cell 100 and prevent heat or flames from being transmitted to other adjacent battery cells 100. In addition, the insulating member 225 may be formed as an insulating sheet, but may also be provided as an insulating pad.

In one embodiment, at least some of the thermal barriers 220 may additionally include a compressible part 226. At least some of the thermal barriers 220 may have a shape in which the insulating member 225 and the compressible part 226 are stacked.

The compressible part 226 may be elastically deformed to be compressed when a specific battery cell 100 expands, thereby suppressing the expansion of the entire volume of the cell assembly 210. To this end, the compressible pad may be composed of a polyurethane foam, but its material or structure is not limited thereto. The compressible pad may have a size corresponding to a wide surface of the battery cell 100, but its size may be changed in various ways.

In one embodiment, the thermal barrier 220 may not include the compressible part 226. In addition, in one embodiment, the stacking structure of the thermal barrier 220 may be changed in various ways. For example, although FIG. 4 illustrates a thermal barrier 220 in which a compressible part 226 is disposed on both sides of an insulating member 225, the thermal barrier 220 may have a structure in which the insulating member 225 is disposed on both sides of the compressible part 226. In addition, the thermal barrier 220 may additionally include at least one of an extinguishing agent or a phase change material (PCM) according to an endothermic reaction instead of or in addition to the compressible part 226.

The sheet member 250 may cover the venting hole 237 of the module cover 235. The sheet member 250 may be melted or burned by high-temperature gas or flames when an event such as thermal runaway occurs, thereby opening the venting hole 237. Accordingly, when an event occurs, high temperature gas or flames generated by the battery cell 100 may be easily discharged externally of the module cover 235 through the venting hole 237.

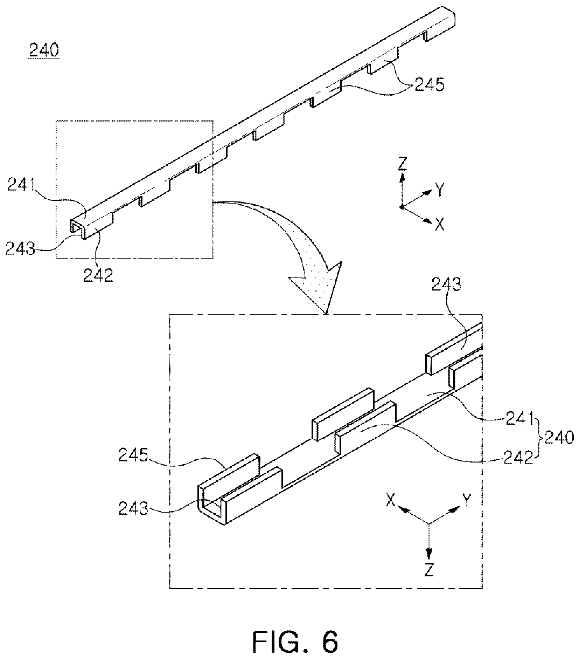

FIG. 6 is a perspective view illustrating a heat transfer blocking member 240 according to another embodiment.

Compared to the heat transfer blocking member 240 illustrated in FIG. 5, the heat transfer blocking member 240 illustrated in FIG. 6 is different in that it includes multiple protrusions 245. The description of the heat transfer blocking member 240 illustrated in FIG. 5, excluding the differences, may also be applied to FIG. 6.

Referring to FIG. 6, the heat transfer blocking member 240 may include a top part 241 covering a thermal barrier 220 and an extension portion 242 extending from the top part 241 to form a receiving groove 243. The extension portion 242 may include multiple protrusions 245 spaced apart from each other along the longitudinal direction (Y) of the heat transfer blocking member 240.

The top part 241 may have a shape that covers the end of the thermal barrier 220 from the upper side. The protrusion 245 may have a shape in which at least a portion of the extension portion 242 is cut off. A space between the plurality of protrusions 245 in the third direction, which is the longitudinal direction (Y) of the heat transfer blocking member 240, may form a cut portion. The thermal barrier 220 and the heat transfer blocking member 240 may have a long length along the longitudinal direction (Y). When the heat transfer blocking member 240 has a plurality of protrusions 245, a length at which the extension portion 242 of the heat transfer blocking member 240 and the end of the thermal barrier 220 come into contact with each other may be reduced. Therefore, the plurality of protrusions 245 spaced apart from each other may facilitate the coupling between the thermal barrier 220 and the heat transfer blocking member 240. For example, when forming a plurality of protrusions 245 spaced apart from each other, the assemblability between the thermal barrier 220 and the heat transfer blocking member 240 may be improved.

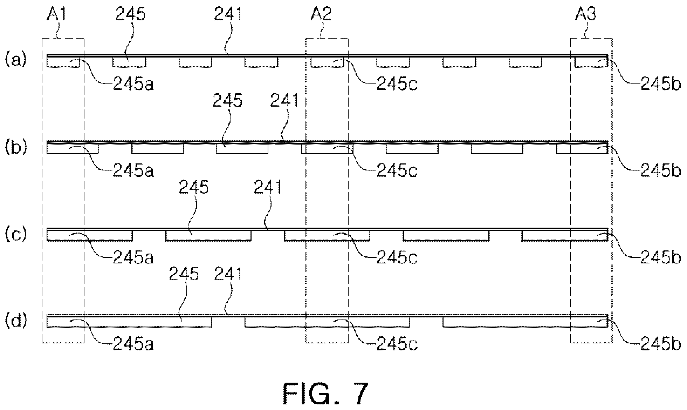

The (a) to (d) portions of FIG. 7 are side views illustrating various forms of protrusions 245 in the heat transfer blocking member 240.

As illustrated in the (a) to (d) portions of FIG. 7, the length or number of protrusions 245 in the longitudinal direction (Y) of the heat transfer blocking member 240 may be varied.

To easily install the heat transfer blocking member 240 including a plurality of protrusions 245 on the thermal barrier 220, the protrusions 245 may be disposed on both ends and the center of the heat transfer blocking member 240, respectively. In detail, the protrusion 245 may include a first protrusion 245a and a second protrusion 245b formed on both ends of the longitudinal direction (Y) of the heat transfer blocking member 240, respectively, and at least one third protrusion 245c disposed between the first protrusion 245a and the second protrusion 245b.

The first protrusion 245a and the second protrusion 245b may extend from the longitudinal direction (Y) end of the top part 241 along the longitudinal direction (Y) of the heat transfer blocking member 240 by a preset length. When the first protrusion 245a and the second protrusion 245b extend to both ends of the heat transfer blocking member 240, the heat transfer blocking member 240 may be easily installed on the thermal barrier 220.

The (a) to (d) portions of FIG. 7 respectively illustrate a shape in which a plurality of protrusions 245 having the same length are spaced apart and disposed, but the length and number of protrusions 245 may be changed in various ways.

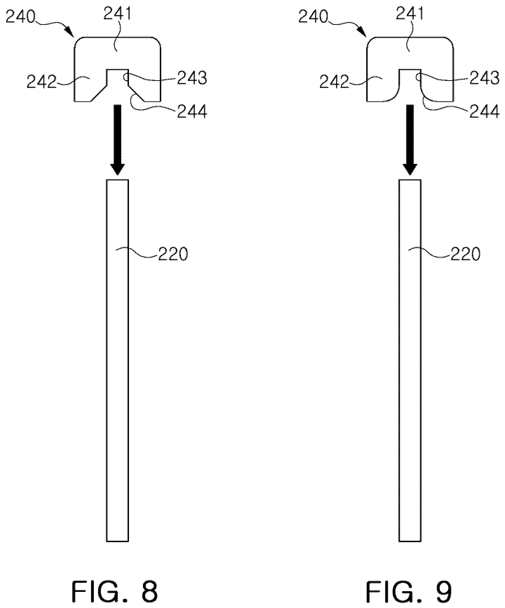

FIGS. 8 and 9 are front views illustrating a heat transfer blocking member 240 according to a modified embodiment.

Compared to the heat transfer blocking member 240 illustrated in FIG. 5, the heat transfer blocking member 240 illustrated in FIGS. 8 and 9 is different in that it additionally includes a guide portion 244. The description of the heat transfer blocking member 240 illustrated in FIG. 5, excluding the differences, may also be applied to FIGS. 8 and 9, respectively.

Referring to FIGS. 8 and 9, the heat transfer blocking member 240 according to one embodiment may include a top part 241 covering a thermal barrier 220, and an extension portion 242 extending from the top part 241 to form a receiving groove 243.

The extension portion 242 may include a guide portion 244 formed at the entrance of the receiving groove 243 and widening in a direction toward the thermal barrier 220. Since the entrance of the guide portion 244 has a wide width, the process of assembling the heat transfer blocking member 240 to the thermal barrier 220 may be easily performed. For example, the guide portion 244 of the heat transfer blocking member 240 may guide the end of the thermal barrier 220 to be easily inserted into the receiving groove 243, thereby improving the assemblability of the heat transfer blocking member 240 and the thermal barrier 220.

The guide portion 244 may include at least one of a chamfer shape or a round shape.

For example, the guide portion 244 may include a chamfer shape formed at the entrance of the receiving groove 243 as illustrated in FIG. 8. In addition, the guide portion 244 may include a round shape formed at the entrance of the receiving groove 243 as illustrated in FIG. 9. The chamfer size of the chamfer shape and the radius of the round shape may be variously changed to improve the assemblability.

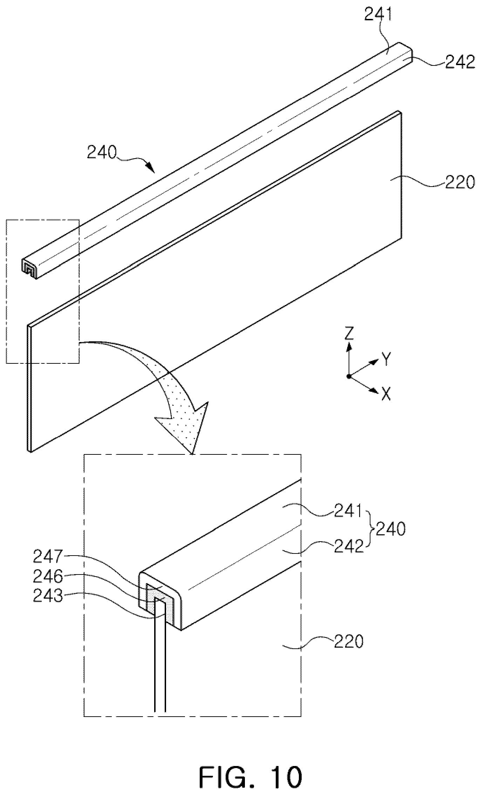

FIG. 10 is a schematic diagram illustrating the state before and after the combination of a heat transfer blocking member 240 and a thermal barrier 220 according to the other embodiment.

Compared to the heat transfer blocking member 240 shown in FIG. 5, the heat transfer blocking member 240 shown in FIG. 10 is different in that it includes an inner portion 246 and an outer portion 247 having different materials. The description of the heat transfer blocking member 240 shown in FIG. 5, excluding the differences, may also be applied to FIG. 10.

The heat transfer blocking member 240 includes an inner portion 246 that contacts the thermal barrier 220 and an outer portion 247 located outside the inner portion 246, and the inner portion 246 may include a material having a higher degree of hardness than the outer portion 247.

When the hardness of the inner portion 246 is higher than that of the outer portion 247, the rigidity of the inner portion 246 is high, so that the heat transfer blocking member 240 may be easily installed on the thermal barrier 220. In detail, the assemblability of the heat transfer blocking member 240 and the thermal barrier 220 may be improved due to the increased rigidity of the inner portion 246.

The inner portion 246 may include a plastic material, and the outer portion 247 may include an elastic material.

Since the inner portion 246 includes a plastic material having a higher rigidity than the outer portion 247, the assemblability of the heat transfer blocking member 240 and the thermal barrier 220 may be improved.

The inner portion 246 may include modified polyphenylene oxide (mPPO), polypropylene (PP), polybutylene terephthalate (PBT), or polystyrene sulfonate (PSS), which have excellent rigidity and heat resistance. The inner portion 246 may use the aforementioned materials alone, or may use a material in which glass fiber (GF) or talc powder (TD) is mixed with the aforementioned materials. For example, the inner portion 246 may include a material in which glass fiber is mixed with modified polyphenylene oxide (mPPO), a material in which talc powder is mixed with polypropylene (PP), a material in which glass fiber is mixed with polybutylene terephthalate (PBT), or a material in which glass fiber is mixed with polystyrene sulfonate (PSS).

In addition, the inner portion 246 may also include Acrylonitrile Butadiene Styrene (ABS) or polyamide (PA) which have good formability.

The outer portion 247 in contact with the module cover 235 has elasticity, and may thus effectively block the gap between the heat transfer blocking member 240 and the module cover 235.

The outer portion 247 may include at least some of Ethylene Propylene Diene Monomer (EPDM), nitrile butadiene rubber (NBR), fluoroelastomer (FKM), thermoplastic elastomer (TPE), and silicone rubber. The outer portion 247 may include a heat-resistant and/or flame-retardant material.

The inner portion 246 and the outer portion 247 may be integrally formed through double injection. The inner portion 246 may be first injection-molded, and then the inner portion 246 and the outer portion 247 may be integrally injection-molded in a second step. In this case, the heat transfer blocking member 240 may be easily manufactured.

The inner portion 246 may have a continuous shape along the longitudinal direction (Y) of the heat transfer blocking member 240. The outer portion 247 may also have a continuous shape along the longitudinal direction (Y) of the heat transfer blocking member 240.

Meanwhile, the heat transfer blocking member 240 illustrated in FIG. 10 may additionally include the guide portion 244 illustrated in FIGS. 8 and 9. The guide portion 244 may be formed on the inner portion 246, or may be formed over both the inner portion 246 and the outer portion 247. When the guide portion 244 is installed, the process of assembling the heat transfer blocking member 240 to the thermal barrier 220 may be easily performed.

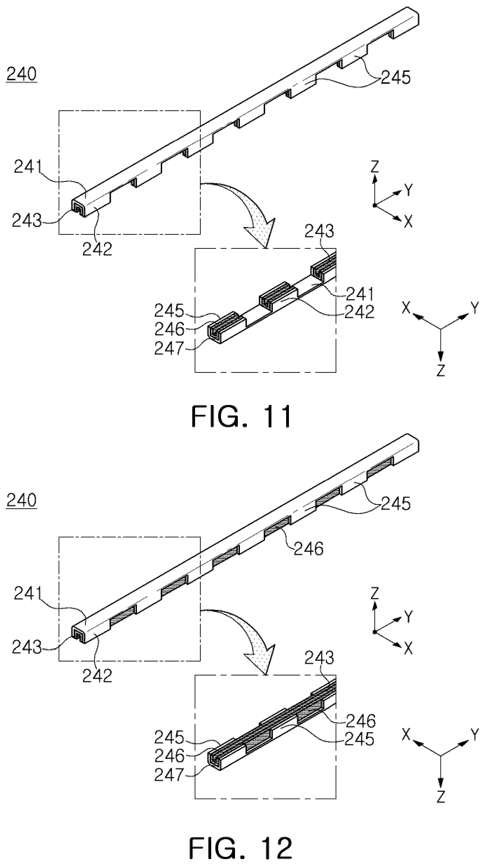

FIG. 11 is a perspective view illustrating a heat transfer blocking member 240 according to the other embodiment.

Compared to the heat transfer blocking member 240 illustrated in FIG. 10, the heat transfer blocking member 240 illustrated in FIG. 11 differs in that it includes a protrusion 245 and that the inner portion 246 has a discontinuous shape. The description of the heat transfer blocking member 240 illustrated in FIG. 10, excluding the differences, may also be applied to FIG. 11.

The heat transfer blocking member 240 may include a top part 241 covering a thermal barrier 220, and an extension portion 242 extending from the top part 241 to form a receiving groove 243. The extension portion 242 may include a plurality of protrusions 245 spaced apart from each other along the longitudinal direction (Y) of the heat transfer blocking member 240. The inner portion 246 may be disposed on each of the plurality of protrusions 245.

The inner portion 246 may have a shape that is discontinuously disposed on the inner side of the outer portion 247. For example, a plurality of inner portions 246 spaced apart from each other may be disposed on the inner side of the outer portion 247.

In the embodiment illustrated in FIG. 11, both the inner portion 246 that is first injection-molded and the outer portion 247 that is second injection-molded together with the inner portion 246 may have a partially protruding shape. In this case, the heat transfer blocking member 240 has a flexible structure in a portion in which the inner portion 246 is not located, so that the assemblability may be improved.

FIG. 12 is a perspective view illustrating a heat transfer blocking member 240 according to the other embodiment.

Compared to the heat transfer blocking member 240 illustrated in FIG. 10, the heat transfer blocking member 240 illustrated in FIG. 12 is different in that it includes a protrusion 245. The description of the heat transfer blocking member 240 illustrated in FIG. 10, excluding the differences, may also be applied to FIG. 12.

The heat transfer blocking member 240 may include a top part 241 covering the thermal barrier 220 and an extension portion 242 extending from the top part 241 to form a receiving groove 243. An outer portion 247 of the extension portion 242 may include a plurality of protrusions 245 spaced apart from each other along the longitudinal direction (Y) of the heat transfer blocking member 240. An inner portion 246 may have a shape exposed externally between the protrusions 245.

The inner portion 246 of the heat transfer blocking member 240 illustrated in FIG. 12 may have a continuous shape along the longitudinal direction (Y) of the heat transfer blocking member 240. Since the outer portion 247 has a partially cut shape, the inner portion 246 may be exposed externally through the protrusion 245.

The embodiment illustrated in FIG. 12 forms the inner portion 246 that is firstly injection-molded into a continuous shape, and the outer portion 247 that is secondarily injection-molded together with the inner portion 246 has a cut shape. Therefore, the embodiment illustrated in FIG. 12 may reduce the material consumption of the outer portion 247 compared to the embodiment illustrated in FIG. 10. In addition, since the embodiment illustrated in FIG. 12 has a shape in which the inner portion 246 having rigidity is integrally extended, the structural stability and rigidity may be increased compared to the embodiment illustrated in FIG. 11.

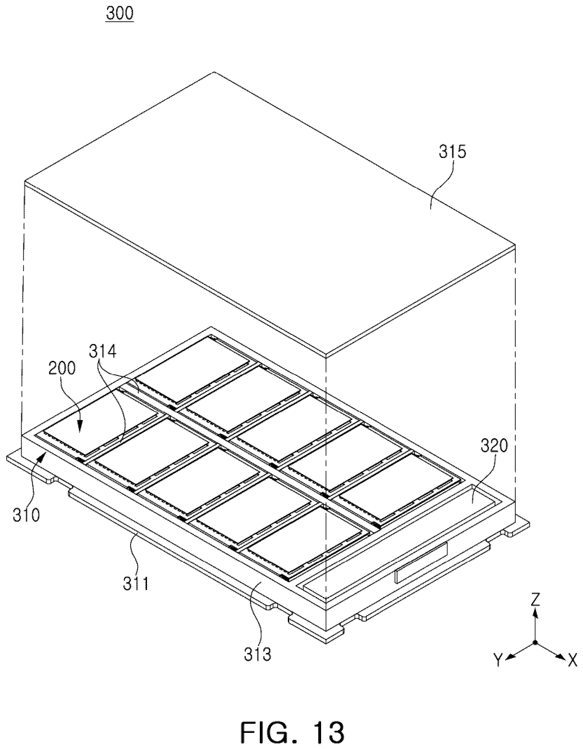

FIG. 13 is a partially exploded perspective view of a battery pack 300 according to one embodiment.

Referring to FIG. 13, a battery pack 300 according to one embodiment may include a pack housing 310 and a plurality of battery modules 200 accommodated in the pack housing 310. The configuration of the battery module 200 described with reference to FIGS. 1 to 12 may be applied to the battery module 200 of FIG. 13.

The pack housing 310 may accommodate components installed in the battery pack 300, such as the battery module 200. The pack housing 310 may include a housing body 311 that supports the battery module 200 and a pack cover 315 that covers the housing body 311. The housing body 311 may include a side wall 313 facing the side of the battery module 200. The pack housing 310 may include a partition wall 314 that crosses the space in which the battery modules 200 are installed. For example, the accommodation space of the pack housing 310 may be divided into a plurality of spaces by the partition wall 314. The partition wall 314 may be installed across the accommodation space to reinforce the rigidity of the pack housing 310. The partition wall 314 may divide the space in which the plurality of battery modules 200 are accommodated, thereby blocking or hindering at least a portion of a flame or gas generated by one battery module 200 from spreading to an adjacent battery module 200.

The battery pack 300 may include a battery control unit 320 for controlling the battery modules 200. The battery control unit 320 may be disposed inside the pack housing 310. The battery control unit 320 may include a battery management system (BMS). In one embodiment, the battery control unit 320 may be referred to as a processor.

The above-described contents are merely examples of applying the principles of the present disclosure. In addition, some of the components in the above-described embodiments may be deleted and implemented, and respective embodiments may be implemented in combination with each other.

As set forth above, according to one embodiment, heat propagation and thermal runaway between battery cells may be delayed.

According to one embodiment, high-temperature gas, flame, or the like generated by a battery cell may be blocked or prevented from flowing into an adjacent battery cell.

According to one embodiment, a configuration for delaying or blocking thermal runaway may be easily installed.

Only specific examples of implementations of certain embodiments are described. Variations, improvements and enhancements of the disclosed embodiments and other embodiments may be made based on the disclosure of this patent document.

The present disclosure also relates to the following aspects.

Aspect 1) a battery module, comprising: a cell assembly including a plurality of battery cells and a thermal barrier disposed between at least some of the plurality of battery cells; a module case including a module cover covering the cell assembly; and a heat transfer blocking member disposed between the thermal barrier and the module cover, wherein the thermal barrier includes a first surface and a second surface facing in opposite directions and restricts heat transfer between a first battery cell facing the first surface and a second battery cell facing the second surface, and the heat transfer blocking member includes a receiving groove into which an end of the thermal barrier is inserted.

Aspect 2) In aspect 1, wherein, in the cell assembly, the plurality of battery cells and the thermal barrier are disposed in a first direction, and the heat transfer blocking member contacts the thermal barrier and the module cover in a second direction, perpendicular to the first direction, respectively, and blocks a gap between the thermal barrier and the module cover.

Aspect 3) In aspect 1 or 2, wherein the module cover includes a cover body of a plate shape, and a plurality of venting holes formed in the cover body and configured to discharge at least one of flam or gas generated from the plurality of battery cells to the outside of the module case, and the heat transfer blocking member is disposed between the thermal barrier and the cover body.

Aspect 4) In aspect 3, wherein the plurality of venting holes are disposed so as not to overlap the thermal barrier and the heat transfer blocking member, respectively, in the second direction.

Aspect 5) In any one of aspects 1 to 3, wherein the heat transfer blocking member includes an elastic material.

Aspect 6) In any one of aspects 1 to 5, wherein the heat transfer blocking member further includes a top part covering the thermal barrier and an extension portion extending from the top part to form the receiving groove.

Aspect 7) In aspect 6, wherein the extension portion includes a plurality of protrusions spaced apart from each other in a longitudinal direction of the heat transfer blocking member.

Aspect 8) In aspect 7, wherein the protrusions include a first protrusion and a second protrusion formed on both ends of the heat transfer blocking member, respectively, and at least one third protrusion disposed between the first protrusion and the second protrusion.

Aspect 9) In any one of aspects 6 to 8, wherein the extension portion includes a guide portion formed at an entrance of the receiving groove and widening in a direction toward the thermal barrier.

Aspect 10) In any one of aspects 1 to 9, wherein the heat transfer blocking member includes an inner portion contacting the thermal barrier and an outer portion located outside of the inner portion, wherein the inner portion includes a material having a higher degree of hardness than a hardness of the outer portion.

Aspect 11) In aspect 10, having one or more of the following characteristics (i) to (iii), respectively alone or in combination: (i) the inner portion includes a plastic material, and the outer portion includes an elastic material, (ii) the heat transfer blocking member includes a top part covering the thermal barrier and an extension portion extending from the top part to form the receiving groove, wherein the extension portion includes a plurality of protrusions spaced apart from each other in a longitudinal direction of the heat transfer blocking member, and the inner portion is disposed on each of the plurality of protrusions, and/or (iii) the inner portion and the outer portion are integrally formed through double injection.

Aspect 12) In aspect 10, wherein the inner portion has a continuous shape in a longitudinal direction of the heat transfer blocking member.

Aspect 13) In aspect 12, wherein the heat transfer blocking member includes a top part covering the thermal barrier and an extension portion extending from the top part to form the receiving groove, wherein the outer portion includes a plurality of protrusions spaced apart from each other in the longitudinal direction of the heat transfer blocking member, and the inner portion has a shape exposed externally between the protrusions.

Aspect 14) In any one of aspects 1 to 13, wherein the module cover includes a plurality of venting holes configured to discharge at least one of flame or gas generated from the plurality of battery cells to the outside of the module case, wherein the battery module further comprises a sheet member disposed on the module cover to close the plurality of venting holes.

Aspect 15) A battery pack comprising: a pack housing; and a plurality of battery modules accommodated in the pack housing, wherein the battery modules include, a cell assembly including a plurality of battery cells and a thermal barrier disposed between at least some of the plurality of battery cells; a module case including a module cover covering the cell assembly; and a heat transfer blocking member disposed between the thermal barrier and the module cover, wherein the thermal barrier includes a first surface and a second surface facing in opposite directions, and restricts heat transfer between a first battery cell facing the first surface and a second battery cell facing the second surface, and the heat transfer blocking member includes a receiving groove into which an end of the thermal barrier is inserted.

## Claims

1. A battery module comprising:
a cell assembly including a plurality of battery cells and a thermal barrier disposed between at least some of the plurality of battery cells;
a module case including a module cover covering the cell assembly; and
a heat transfer blocking member disposed between the thermal barrier and the module cover,
wherein the thermal barrier includes a first surface and a second surface facing in opposite directions and restricts heat transfer between a first battery cell facing the first surface and a second battery cell facing the second surface, and
the heat transfer blocking member includes a receiving groove into which an end of the thermal barrier is inserted.

2. The battery module of claim 1, wherein, in the cell assembly, the plurality of battery cells and the thermal barrier are disposed in a first direction, and
the heat transfer blocking member contacts the thermal barrier and the module cover in a second direction, perpendicular to the first direction, respectively, and blocks a gap between the thermal barrier and the module cover.

3. The battery module of claim 1 or 2, wherein the module cover includes a cover body of a plate shape, and a plurality of venting holes formed in the cover body and configured to discharge at least one of flam or gas generated from the plurality of battery cells to the outside of the module case, and
the heat transfer blocking member is disposed between the thermal barrier and the cover body.

4. The battery module of claim 3, wherein the plurality of venting holes are disposed so as not to overlap the thermal barrier and the heat transfer blocking member, respectively, in the second direction.

5. The battery module of any one of claims 1 to 3, wherein the heat transfer blocking member includes an elastic material.

6. The battery module of any one of claims 1 to 5, wherein the heat transfer blocking member further includes a top part covering the thermal barrier and an extension portion extending from the top part to form the receiving groove.

7. The battery module of claim 6, wherein the extension portion includes a plurality of protrusions spaced apart from each other in a longitudinal direction of the heat transfer blocking member.

8. The battery module of claim 7, wherein the protrusions include a first protrusion and a second protrusion formed on both ends of the heat transfer blocking member, respectively, and at least one third protrusion disposed between the first protrusion and the second protrusion.

9. The battery module of any one of claims 6 to 8, wherein the extension portion includes a guide portion formed at an entrance of the receiving groove and widening in a direction toward the thermal barrier.

10. The battery module of any one of claims 1 to 9, wherein the heat transfer blocking member includes an inner portion contacting the thermal barrier and an outer portion located outside of the inner portion,
wherein the inner portion includes a material having a higher degree of hardness than a hardness of the outer portion.

11. The battery module of claim 10, having one or more of the following characteristics (i) to (iii), respectively alone or in combination:
(i) the inner portion includes a plastic material, and the outer portion includes an elastic material,
(ii) the heat transfer blocking member includes a top part covering the thermal barrier and an extension portion extending from the top part to form the receiving groove, wherein the extension portion includes a plurality of protrusions spaced apart from each other in a longitudinal direction of the heat transfer blocking member, and the inner portion is disposed on each of the plurality of protrusions, and/or
(iii) the inner portion and the outer portion are integrally formed through double injection.

12. The battery module of claim 10, wherein the inner portion has a continuous shape in a longitudinal direction of the heat transfer blocking member.

13. The battery module of claim 12, wherein the heat transfer blocking member includes a top part covering the thermal barrier and an extension portion extending from the top part to form the receiving groove,
wherein the outer portion includes a plurality of protrusions spaced apart from each other in the longitudinal direction of the heat transfer blocking member, and
the inner portion has a shape exposed externally between the protrusions.

14. The battery module of any one of claims 1 to 13, wherein the module cover includes a plurality of venting holes configured to discharge at least one of flame or gas generated from the plurality of battery cells to the outside of the module case,
wherein the battery module further comprises a sheet member disposed on the module cover to close the plurality of venting holes.

15. A battery pack comprising:
a pack housing; and
a plurality of battery modules accommodated in the pack housing,
wherein the battery modules include,
a cell assembly including a plurality of battery cells and a thermal barrier disposed between at least some of the plurality of battery cells;
a module case including a module cover covering the cell assembly; and
a heat transfer blocking member disposed between the thermal barrier and the module cover,
wherein the thermal barrier includes a first surface and a second surface facing in opposite directions, and restricts heat transfer between a first battery cell facing the first surface and a second battery cell facing the second surface, and
the heat transfer blocking member includes a receiving groove into which an end of the thermal barrier is inserted.
